(19)

**Europäisches Patentamt**
**European Patent Office**
**Office européen des brevets**

(11)  **EP 4 732 943 A1**

(12)  **EUROPEAN PATENT APPLICATION**
published in accordance with Art. 153(4) EPC

(43) Date of publication:
**29.04.2026 Bulletin 2026/18**

(21) Application number: **25808019.1**

(22) Date of filing: **20.05.2025**

(51) International Patent Classification (IPC):
**B01J 29/12** *(2006.01)*   **B01J 29/22** *(2006.01)*
**B01J 29/44** *(2006.01)*   **B01J 29/67** *(2006.01)*
**B01J 23/46** *(2006.01)*   **B01J 21/06** *(2006.01)*
**B01J 35/64** *(2024.01)*   **B01J 37/02** *(2006.01)*
**C10G 47/14** *(2006.01)*   **C10G 47/18** *(2006.01)*

(52) Cooperative Patent Classification (CPC):
**B01J 21/06; B01J 23/46; B01J 29/12; B01J 29/22;**
**B01J 29/44; B01J 29/67; B01J 35/64; B01J 37/02;**
**C10G 47/14; C10G 47/18**

(86) International application number:
**PCT/KR2025/006817**

(87) International publication number:
**WO 2025/244386 (27.11.2025 Gazette 2025/48)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.05.2024  KR 20240065091**
**20.05.2024  KR 20240065095**

(71) Applicants:
• **LG Chem, Ltd.**
  **Seoul 07336 (KR)**
• **Seoul National University R&DB Foundation**
  **Gwanak-gu**
  **Seoul 08826 (KR)**

(72) Inventors:
• **BANG, Jungup**
  **Daejeon 34122 (KR)**
• **KIM, Do Heui**
  **Seoul 06696 (KR)**
• **CHOI, Jae Soon**
  **Daejeon 34122 (KR)**
• **KIM, Sangjin**
  **Daejeon 34122 (KR)**
• **SUH, Junho**
  **Seoul 08788 (KR)**
• **JUNG, Hyeongdong**
  **Goyang-si Gyeonggi-do 10546 (KR)**

(74) Representative: **Goddar, Heinz J.**
**Boehmert & Boehmert**
**Anwaltspartnerschaft mbB**
**Pettenkoferstrasse 22**
**80336 München (DE)**

(54)  **CATALYST FOR HYDROCRACKING, METHOD FOR PREPARING SAME, AND METHOD FOR PRODUCING NAPHTHA**

(57)   Disclosed is a catalyst for hydrocracking, specifically a Ru-based catalyst for hydrocracking, including a mixed catalyst of a supported catalyst with a zeolite catalyst, wherein the weight ratio of the supported catalyst to the zeolite catalyst of the mixed catalyst falls within a specific range. When the catalyst is used for hydrocracking, a high naphtha yield and a low methane yield are provided, and excellent reaction activity is realized under a mild condition.

[FIG. 1]

## Description

[Technical Field]

The present disclosure relates to a catalyst for hydrocracking, a method for preparing the same and a method for preparing naphtha.

The present application claims the benefit of Korean Patent Application No. 10-2024-0065091 and Korean Patent Application No. 10-2024-0065095 filed on May 20, 2024, in the Korean Intellectual Property Office, the entire disclosure of which is incorporated herein by reference.

[Background Art]

Polyolefin is a material having high chemical stability and improved mechanical properties, and is easy to process and inexpensive, and thus it is in high demand to such a degree that it accounts for approximately 60% or more of the total plastic use. However, the rate at which such polyolefin-based waste plastics are recycled is less than approximately 15%, and the rate at which they are chemically recycled is much lower than this and is less than approximately 2%.

Currently, chemical recycling technologies of waste plastics are classified into a pyrolysis method, a hydrothermal treatment method, a hydrocracking method, or the like. The pyrolysis method is carried out at a high temperature of 400°C to 600°C in the absence of a catalyst, and is disadvantageous in that the liquid oil produced by the above method shows a high number of carbon atoms and has a lot of solid residues and impurities. In addition, the hydrothermal treatment method generates pyrolyzed oil and gases by decomposing waste plastics with high-pressure water vapor at a temperature above the critical point condition (373°C, 220 bar). The method is disadvantageous in that it requires high operating costs to maintain the critical point condition and causes corrosion of equipment due to supercritical water, and that the reaction temperature is as high as above 300°C. Finally, the hydrocracking method generates liquid and/or gaseous alkenes by using a non-uniform catalyst under the condition of high-pressure hydrogen in the presence of a catalyst, and is advantageous in that liquid alkenes having a low molecular weight range may be generated at a low temperature of 300°C or lower, and it is easy to recover the catalyst and reuse the catalyst.

However, although studies have been conducted to ensure that the above hydrocracking method is carried out at a lower temperature than the existing reaction temperature to inhibit side reactions, lowering the reaction temperature undesirably causes an increase in reaction time or causes a broad range (C5-C40) of number of carbon atoms in liquid oil products. Furthermore, the catalyst used in the hydrocracking method uses a significant amount of noble metals, such as Ru and Pt, having high hydrogen activation ability, and in particular, in the case of Ru-based catalysts, a large amount of byproducts such as methane are produced, and thus there is a problem in that the selectivity of naphtha is low.

Naphtha obtained from waste plastics is mainly introduced to the naphtha cracking center (NCC) process, wherein the naphtha should contain a small amount of olefins (ethylene, etc.) and/or aromatic substances (benzene, etc.). When low-quality naphtha containing a lot of olefins and/or aromatic substances is introduced to the NCC process, there is a problem in that the product has a composition that does not fall within a target range.

Therefore, in the corresponding technical field, it is necessary to develop a catalyst which shows high selectivity to naphtha, while exhibiting high activity in a low-temperature range, and can provide naphtha with improved quality.

**[Disclosure]**

[Technical Problem]

The present disclosure is directed to providing a catalyst for hydrocracking, a method for preparing the same and a method for preparing naphtha.

[Technical Solution]

The present inventors conducted intensive studies and developed a Ru/TiO$_2$ supported catalyst and a Ru/CeO$_2$ supported catalyst as a Ru-based catalyst with which methane production is suppressed, and found a significant quality- and/or activity-enhancing effect of the supported catalyst and a zeolite catalyst, as a mixed catalyst prepared by physical mixing with the zeolite catalyst, under a low temperature condition, when the supported catalyst and the zeolite catalyst satisfy a specific weight ratio range. Particularly, the present inventors found that even if the same amount of Ru is supported, the Ru particles are affected by the specific surface area and pore structure characteristics of TiO$_2$ and CeO$_2$ and the resultant interaction with Ru. Furthermore, the present disclosure was completed considering the excellent ability of utilizing hydrogen in the hydrocracking reaction of TiO$_2$ and CeO$_2$. The present application provides the following embodiments according to the above.

An exemplary embodiment of the present disclosure provides a catalyst for hydrocracking, including a mixed catalyst of a $Ru/TiO_2$ supported catalyst with a zeolite catalyst, wherein the mixed catalyst has a weight ratio of the $Ru/TiO_2$ supported catalyst to the zeolite catalyst of 1:1 to 1:3.

An exemplary embodiment of the present disclosure provides a catalyst for hydrocracking, including a mixed catalyst of a $Ru/CeO_2$ supported catalyst with a zeolite catalyst, wherein the mixed catalyst has a weight ratio of the $Ru/CeO_2$ supported catalyst to the zeolite catalyst of 1:1 to 1:15.

Another exemplary embodiment of the present disclosure provides a method for preparing a catalyst for hydrocracking, including the steps of: supporting a Ru precursor on a $TiO_2$ support to prepare a $Ru/TiO_2$ supported catalyst; and physically mixing the $Ru/TiO_2$ supported catalyst with a zeolite catalyst to obtain a mixed catalyst, wherein the mixed catalyst has a weight ratio of the $Ru/TiO_2$ supported catalyst to the zeolite catalyst of 1:1 to 1:3.

Still another exemplary embodiment of the present disclosure provides a method for preparing a catalyst for hydrocracking, including the steps of: supporting a Ru precursor on a $CeO_2$ support to prepare a $Ru/CeO_2$ supported catalyst; and physically mixing the $Ru/CeO_2$ supported catalyst with a zeolite catalyst to obtain a mixed catalyst, wherein the mixed catalyst has a weight ratio of the $Ru/CeO_2$ supported catalyst to the zeolite catalyst of 1:1 to 1:15.

Yet another exemplary embodiment of the present disclosure provides a method for preparing naphtha, including a step of carrying out hydrocracking by using polyolefin and the above-described catalyst for hydrocracking in the presence of hydrogen.

[Advantageous Effects]

A catalyst for hydrocracking according to an exemplary embodiment of the present disclosure shows high activity under a low reaction temperature condition, exhibits low selectivity to byproducts (particularly, methane) and high selectivity to naphtha and provides an advantage of a low reaction temperature range, when preparing naphtha by using hydrocracking. In addition, when the catalyst for hydrocracking is used for decomposition of waste plastics based on polyolefin, it provides an advantage of significantly high decomposition capability. Further, naphtha produced by using the catalyst can ensure high quality when it is used for a naphtha cracking center (NCC) process.

[Brief Description of Drawings]

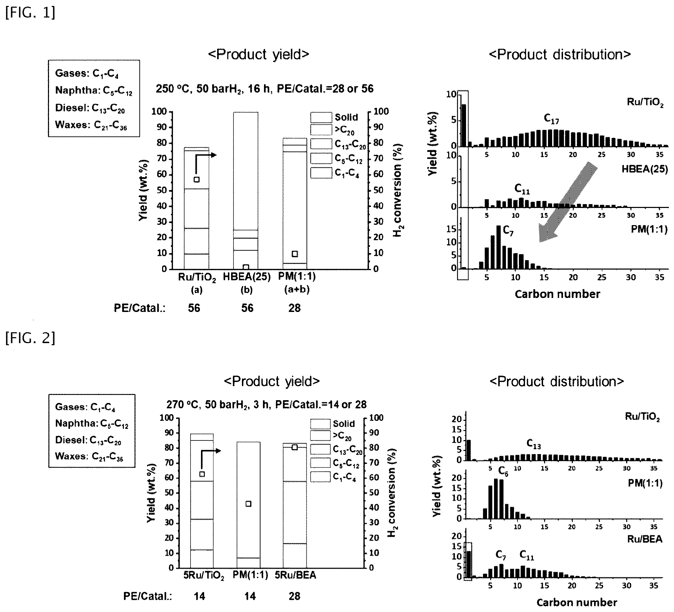

FIG. 1 to FIG. 15 show the results of polyolefin hydrocracking for a catalyst for hydrocracking according to an exemplary embodiment of the present disclosure and catalysts for hydrocracking in contrast thereto.

[Best Mode]

Hereinafter, the present disclosure will be explained in more detail.

Throughout the present specification, when a certain member is described to be located "on" another member, this includes not only the case where the member is in contact with said another member but also the case where another member exists between the two members.

Throughout the present specification, when a part is described to "include" a component, this does not exclude the presence of another component but rather implies that further components may be included, unless the context specifically states otherwise.

The present disclosure is directed to providing a catalyst for hydrocracking which has high activity at low reaction temperature and shows low selectivity to byproducts such as methane and high selectivity to naphtha when carrying out hydrocracking (also referred to as hydrogen addition cracking), a method for preparing the same, and a method for preparing naphtha using the catalyst, as follows.

<Catalyst for hydrocracking including $TiO_2$>

A catalyst for hydrocracking according to an exemplary embodiment of the present disclosure includes a mixed catalyst of a $Ru/TiO_2$ supported catalyst with a zeolite catalyst, wherein the mixed catalyst has a weight ratio of the $Ru/TiO_2$ supported catalyst to the zeolite catalyst of 1:1 to 1:3.

Even if the content of Ru based on the supported catalyst phase is reduced to a range of weight ratio of at least 1/4 and at most 1/2, the catalyst for hydrocracking according to the above-mentioned embodiment has improved plastic decomposition ability for waste plastics based on polyolefin, improves naphtha production while inhibiting methane production and shows a catalyst activity-enhancing effect. Moreover, when preparing naphtha by using the catalyst, yield of naphtha can be improved significantly under a mild condition. In addition, it is possible to save the cost for preparing the catalyst, since the content of Ru is reduced. Further, naphtha produced by using the catalyst can ensure high-quality naphtha in the NCC process.

In the present disclosure, the term 'hydrocracking' may be used exchangeably with such terms as hydrogen addition cracking, hydrogen-added cracking, etc.

In the present disclosure, the term 'supported catalyst' means a catalyst in which a catalyst component is in contact with the surface of a porous catalyst carrier and refers to a catalyst including a porous catalyst carrier on which a catalyst component (or an active component) is supported.

In the present disclosure, 'mixed catalyst' refers to two or more different catalyst substances mixed physically with each other with no chemical reaction, and means a homogeneous mixture unless otherwise stated.

In the present disclosure, 'high-quality' naphtha can be differentiated by checking the color of a liquid product by the naked eyes when using the catalyst for hydrocracking according to an exemplary embodiment of the present disclosure. When checking the color by the naked eyes, a transparent liquid product suggests naphtha containing a trace amount of olefin and/or aromatic substances, wherein the trace amount means such an amount that use of the naphtha under this condition does not affect the composition of the product of the NCC process. Meanwhile, an opaque or yellow-colored liquid product suggests that olefin and/or aromatic substances are contained in the liquid product in such an amount that they affect the composition of the product of the NCC process.

According to an exemplary embodiment of the present disclosure, the zeolite catalyst may be any one selected from FAU (faujasite), BEA (beta), MOR (high-silica mordenite), MFI (ZSM-5), FER (high-silica ferrierite) and CHA (chabazite, SSZ-13), hydrogen form thereof, or a combination thereof. However, it is preferred that the zeolite catalyst is any one selected from FAU (faujasite), BEA (beta), MFI (ZSM-5) and CHA (chabazite, SSZ-13), hydrogen form thereof, or a combination thereof.

In the present disclosure, 'zeolite' catalysts may be classified into FAU, BEA, MOR, MFI, FER, CHA, etc., depending on structure. For example, in the case of zeolites having an FAU structure, they may be classified into Y type (Si/Al > 1.5), X type (Si/Al < 1.5), etc., depending on molar ratio of Si to Al. The type of zeolite is not particularly limited as long as it does not deviate from the scope of the present disclosure.

According to an exemplary embodiment of the present disclosure, $TiO_2$ may be any one type selected from rutile, anatase and brookite, or a combination thereof.

In the present disclosure, '$TiO_2$' is a polymorph and may be classified into rutile corresponding to a stable phase, and anatase and brookite corresponding to a meta-stable phase, depending on stability. The type of zeolite is not particularly limited as long as it does not deviate from the scope of the present disclosure.

According to an exemplary embodiment of the present disclosure, the zeolite catalyst may have a pore diameter of 5.4 Å or more.

According to another exemplary embodiment of the present disclosure, the zeolite catalyst may have a pore diameter of 5.4 Å or more, 5.5 Å or more, 5.6 Å or more, 5.7 Å or more, 5.8 Å or more, 5.9 Å or more, or 6.0 Å or more.

According to an exemplary embodiment of the present disclosure, the zeolite catalyst may have a pore diameter of 10 Å or less.

According to another exemplary embodiment of the present disclosure, the zeolite catalyst may have a pore diameter of 10 Å or less, 9.5 Å or less, 9.0 Å or less, 8.5 Å or less, or 8.0 Å or less.

When the pore diameter of the zeolite catalyst satisfies the above-defined range, hydrocracking may be improved, and thus naphtha production may be enhanced while inhibiting methane production.

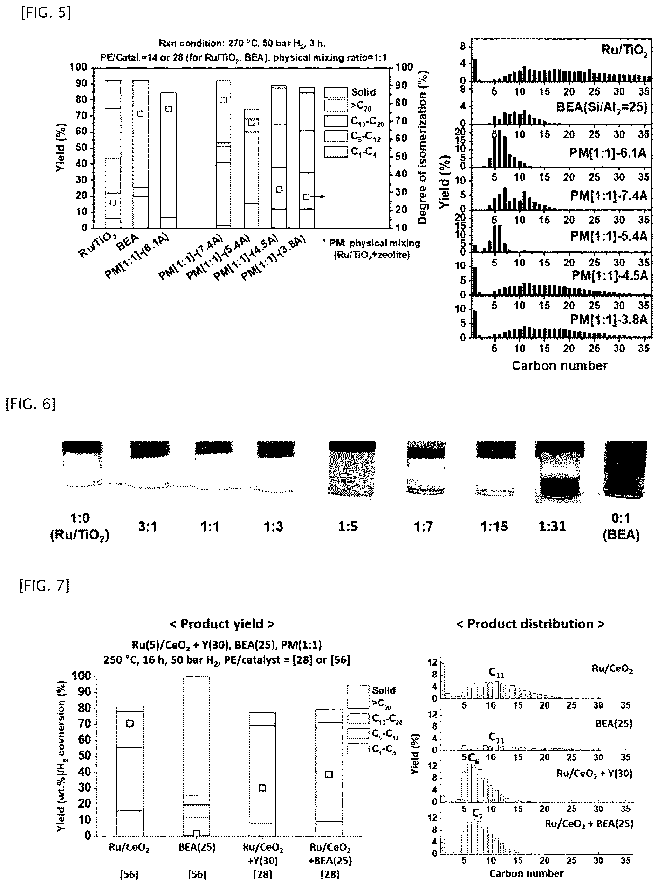

Referring to FIG. 5, when using zeolite catalysts (e.g. ZSM-5, MOR, Y, BEA, etc.) having a pore diameter satisfying the above-defined range, it can be seen that yield of naphtha is improved as compared to cases where a supported catalyst or a zeolite catalyst is used alone.

According to an exemplary embodiment of the present disclosure, the zeolite catalyst may be commercially available one.

According to an exemplary embodiment of the present disclosure, the zeolite catalyst may be a hydrogenated zeolite catalyst prepared by subjecting an ammonium-form zeolite to firing at a temperature of 500°C for 5 hours.

According to an exemplary embodiment of the present disclosure, the $Ru/TiO_2$ supported catalyst may include Ru in an amount of 0.1-10 parts by weight based on 100 parts by weight of $TiO_2$.

When the above-defined range is satisfied, the rate of methane production is significantly low and the reaction activity is further improved. Particularly, when the $Ru/TiO_2$ supported catalyst includes Ru in an amount of less than 0.1 parts by weight based on 100 parts by weight of $TiO_2$, the reaction activity is lowered to cause degradation of the quality of a final product. When the $Ru/TiO_2$ supported catalyst includes Ru in an amount of larger than 10 parts by weight, methane production may be increased.

<Method for preparing catalyst for hydrocracking using $TiO_2$ as support>

A method for preparing a catalyst for hydrocracking according to an exemplary embodiment of the present disclosure includes the steps of: supporting a Ru precursor on a $TiO_2$ support to prepare a $Ru/TiO_2$ supported catalyst; and physically mixing the $Ru/TiO_2$ supported catalyst with a zeolite catalyst to obtain a mixed catalyst, wherein the mixed catalyst has a weight ratio of the Ru/TiO$_2$ supported catalyst to the zeolite catalyst of 1:1 to 1:3.

The method for preparing a catalyst for hydrocracking according to this embodiment can reduce the content of Ru based on the supported catalyst phase to a range of weight ratio of at least 1/4 and at most 1/2, and thus can reduce the cost required for preparing the catalyst. Furthermore, the catalyst obtained by the method shows an activity-enhancing effect when being used for preparing naphtha as described above and can significantly improve yield of naphtha under a mild condition. Particularly, when using TiO$_2$ as metal oxide used for a support, there are provided effects of significantly improving polyolefin (or waste plastic based on polyolefin) decomposition ability and significantly inhibiting methane production.

In the present disclosure, 'Ru precursor' refers to Ru-containing salt (e.g. ruthenium chloride hydrate) dissolved in distilled water, which is a substance converted into an active catalyst or producing an active catalyst in a catalytic reaction system, and does not participate in catalytic reaction in itself but shows catalytic activity subsequently in a catalytic reaction system due to a change in structure. A catalyst precursor having a ruthenium-containing catalyst component is referred to as Ru precursor.

In the present disclosure, 'physical mixing' refers to mixing of two or more substances through a physical method and may be compared with 'chemical mixing' using an additive, such as a dispersant. Parameters, such as time, force, agitation rate, etc., may be modified by those skilled in the art, if necessary, in order to obtain a homogeneously mixed catalyst through physical mixing.

According to an exemplary embodiment of the present disclosure, the step of preparing a Ru/TiO$_2$ supported catalyst may include the steps of: preparing a precursor solution containing a Ru precursor; adding TiO$_2$ to the precursor solution to prepare a slurry; drying the slurry; and reducing the dried slurry under hydrogen atmosphere to obtain a Ru/TiO$_2$ supported catalyst.

In this embodiment, the step of drying the slurry is intended to reduce the content of solvent (e.g. water) contained in the precursor solution and may be carried out through hot air drying, etc., but is not particularly limited as long as it does not deviate from the scope of the present disclosure. In this embodiment, the solvent (e.g. water) of the precursor solution (or aqueous precursor solution) may be allowed to evaporate by using an instrument, such as a rotary evaporator, in order to further facilitate drying before the step of drying the slurry, wherein rpm and temperature conditions may be modified by those skilled in the art, if necessary.

According to another exemplary embodiment of the present disclosure, the volume, temperature and time of hydrogen applied to the hydrogen atmosphere during the reduction are not particularly limited as long as they correspond to conditions capable of reducing ruthenium sufficiently, and may be modified by those skilled in the art, if necessary.

According to an exemplary embodiment of the present disclosure, the step of preparing a Ru/TiO$_2$ supported catalyst may include a step of supporting the Ru precursor on a TiO$_2$ support through an impregnation method, a precipitation method or an ion exchange method.

In the present disclosure, when preparing the supported catalyst, methods known to those skilled in the art, such as a wet impregnation method, an excess impregnation method, a dipping impregnation method, etc., may be used.

In the present disclosure, the physical mixing step refers to physically mixing the Ru/TiO2 supported catalyst with the zeolite catalyst under a dry or wet condition through a pulverization or micronization process, or the like, wherein the physical mixing means may be exemplified by an agitator, a mortar grinding or grinding, etc., and is not particularly limited as long as it corresponds to a means for physical mixing. In addition, different catalysts may be introduced simultaneously or sequentially by using such an agitator, or the like, and mixed physically. In a variant, in preparing naphtha as described hereinafter, reactants, such as polyolefin, and different catalysts may be introduced together, and then such different catalysts may be mixed physically during hydrocracking.

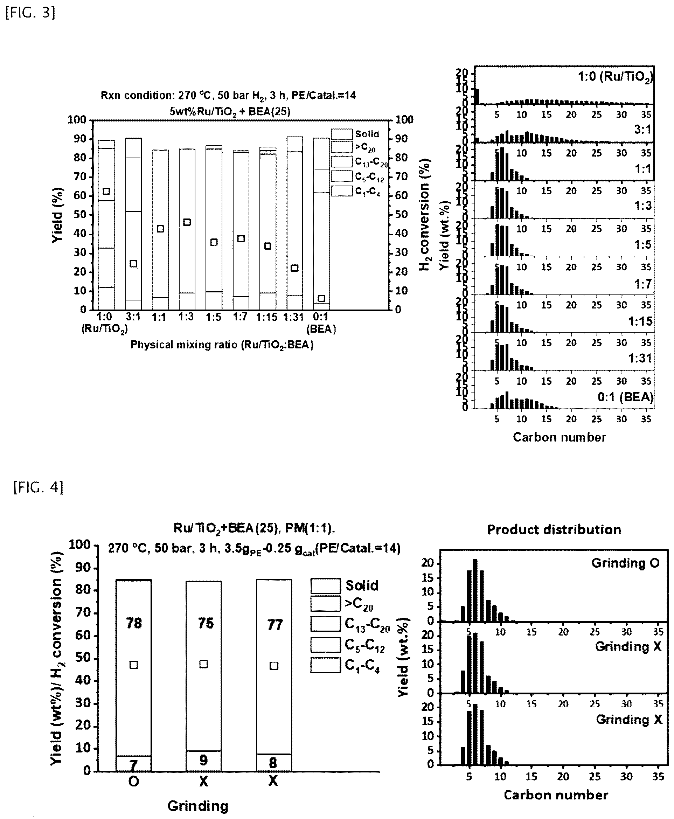

Referring to FIG. 4, when a Ru/TiO$_2$ supported catalyst and a zeolite catalyst are physically agitated by means of mortar grinding (represented by Grinding O), the first bar graph or the first carbon number profile graph on the right shows the results of hydrocracking with polyolefin. In addition, when they are physically mixed by means of agitator (represented by Grinding X), the second bar graph or the carbon profile graph in the middle shows the results of hydrocracking with polyolefin after physically mixing different catalysts first, and the third bar graph or the carbon number profile graph at the bottom represents the results of hydrocracking after different catalysts and polyolefin are physically mixed together. It can be seen from the comparison of naphtha yield and methane yield that there is no significant difference in naphtha yield and methane yield as long as the mixing corresponds to physical mixing.

<Catalyst for hydrocracking including CeO$_2$>

A catalyst for hydrocracking according to an exemplary embodiment of the present disclosure includes a mixed catalyst of a Ru/CeO$_2$ supported catalyst with a zeolite catalyst, wherein the mixed catalyst has a weight ratio of the Ru/CeO$_2$ supported catalyst to the zeolite catalyst of 1:1 to 1:15.

Even if the content of Ru based on the supported catalyst phase is reduced to a range of weight ratio of at least 1/16 and at most 1/2, the catalyst for hydrocracking according to the above-mentioned embodiment has improved plastic decomposition ability for waste plastics based on polyolefin, improves naphtha production while inhibiting methane production and shows a catalyst activity-enhancing effect. Moreover, when preparing naphtha by using the catalyst, yield of naphtha can be improved significantly under a mild condition. In addition, it is possible to save the cost for preparing the catalyst, since the content of Ru is reduced. Further, naphtha produced by using the catalyst can ensure high-quality naphtha in the NCC process.

Herein, the same contents as described above may be applied to the definition of each term.

According to an exemplary embodiment of the present disclosure, the zeolite catalyst may be any one selected from FAU (faujasite), BEA (beta), MOR (high-silica mordenite), MFI (ZSM-5), FER (high-silica ferrierite) and CHA (chabazite, SSZ-13), hydrogen form thereof, or a combination thereof. However, it is preferred that the zeolite catalyst is any one selected from FAU (faujasite), BEA (beta), MFI (ZSM-5) and CHA (chabazite, SSZ-13), hydrogen form thereof, or a combination thereof.

In the present disclosure, 'zeolite' catalysts may be classified into FAU, BEA, MOR, MFI, FER, CHA, etc., depending on structure. For example, in the case of zeolites having an FAU structure, they may be Y type (Si/Al > 1.5), X type (Si/Al < 1.5), etc., depending on molar ratio of Si to Al. The type of zeolite is not particularly limited as long as it does not deviate from the scope of the present disclosure.

According to an exemplary embodiment of the present disclosure, the zeolite catalyst may have a pore diameter of 5.4 Å or more.

According to another exemplary embodiment of the present disclosure, the zeolite catalyst may have a pore diameter of 5.4 Å or more, 5.5 Å or more, 5.6 Å or more, 5.7 Å or more, 5.8 Å or more, 5.9 Å or more, or 6.0 Å or more.

According to an exemplary embodiment of the present disclosure, the zeolite catalyst may have a pore diameter of 10 Å or less.

According to another exemplary embodiment of the present disclosure, the zeolite catalyst may have a pore diameter of 10 Å or less, 9.5 Å or less, 9.0 Å or less, 8.5 Å or less, or 8.0 Å or less.

When the pore diameter of the zeolite catalyst satisfies the above-defined range, hydrocracking into a specific product may be improved, and thus naphtha production may be enhanced while inhibiting methane production.

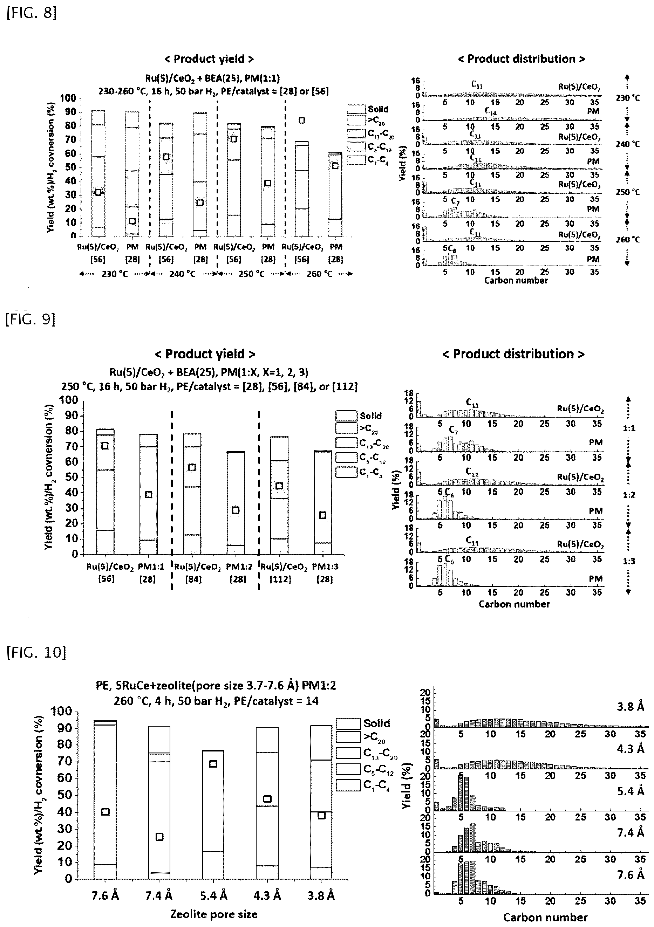

Referring to FIG. 10, when using a zeolite catalyst having a pore diameter satisfying the above-defined range, it can be seen that yield of naphtha is improved as compared to cases where a supported catalyst or a zeolite catalyst is used alone.

According to an exemplary embodiment of the present disclosure, the zeolite catalyst may be commercially available one.

According to an exemplary embodiment of the present disclosure, the zeolite catalyst may be a hydrogenated zeolite catalyst prepared by subjecting an ammonium-form zeolite to firing at a temperature of 500°C for 5 hours.

According to an exemplary embodiment of the present disclosure, the $Ru/CeO_2$ supported catalyst may include Ru in an amount of 0.1-10 parts by weight based on 100 parts by weight of $CeO_2$.

When the above-defined range is satisfied, the rate of methane production is significantly low and the reaction activity is further improved. Particularly, when the $Ru/CeO_2$ supported catalyst includes Ru in an amount of larger than 10 parts by weight based on 100 parts by weight of $CeO_2$, methane production may be increased. Meanwhile, when the $Ru/CeO_2$ supported catalyst includes Ru in an amount of less than 0.1 parts by weight, the reaction activity is lowered to cause degradation of the quality of a final product.

<Method for preparing catalyst for hydrocracking using $CeO_2$ as support>

A method for preparing a catalyst for hydrocracking according to an exemplary embodiment of the present disclosure includes the steps of: supporting a Ru precursor on a $CeO_2$ support to prepare a $Ru/CeO_2$ supported catalyst; and physically mixing the $Ru/CeO_2$ supported catalyst with a zeolite catalyst to obtain a mixed catalyst, wherein the mixed catalyst has a weight ratio of the $Ru/CeO_2$ supported catalyst to the zeolite catalyst of 1:1 to 1:15.

The method for preparing a catalyst for hydrocracking according to this embodiment can reduce the content of Ru based on the supported catalyst phase to a range of weight ratio of at least 1/16 and at most 1/2, and thus can reduce the cost required for preparing the catalyst. Furthermore, the catalyst obtained by the method shows an activity-enhancing effect when being used for preparing naphtha as described above and can significantly improve yield of naphtha under a mild condition. Particularly, when using $CeO_2$ as metal oxide used for a support, there are provided effects of significantly improving polyolefin (or waste plastic based on polyolefin) decomposition ability and significantly inhibiting methane production.

In the present disclosure, the same contents as described above may be applied to the definition of each term.

According to an exemplary embodiment of the present disclosure, the step of preparing a $Ru/CeO_2$ supported catalyst may include the steps of: preparing a precursor solution containing a Ru precursor; adding $CeO_2$ to the precursor solution to prepare a slurry; drying the slurry; and reducing the dried slurry under hydrogen atmosphere to obtain a $Ru/CeO_2$ supported catalyst.

In this embodiment, the step of drying the slurry is intended to reduce the content of solvent (e.g. water) contained in the precursor solution and may be carried out through hot air drying, etc., but is not particularly limited as long as it does not deviate from the scope of the present disclosure. In this embodiment, the solvent (e.g. water) of the precursor solution (or aqueous precursor solution) may be allowed to evaporate by using an instrument, such as a rotary evaporator, in order to further facilitate drying before the step of drying the slurry, wherein rpm and temperature conditions may be modified by those skilled in the art, if necessary.

According to another exemplary embodiment of the present disclosure, the volume, temperature and time of hydrogen applied to the hydrogen atmosphere during the reduction are not particularly limited as long as they correspond to conditions capable of reducing ruthenium sufficiently, and may be modified by those skilled in the art, if necessary.

According to an exemplary embodiment of the present disclosure, the step of preparing a $Ru/CeO_2$ supported catalyst may include a step of supporting the Ru precursor on a $CeO_2$ support through an impregnation method, a precipitation method or an ion exchange method.

In the present disclosure, when preparing the supported catalyst, methods known to those skilled in the art, such as a wet impregnation method, an excess impregnation method, a dipping impregnation method, etc., may be used.

In the present disclosure, the physical mixing step refers to physically mixing the $Ru/CeO_2$ supported catalyst with the zeolite catalyst homogeneously by using an agitator, a mortar grinding or a grinding, etc., wherein the mixing means is not particularly limited as long as it corresponds to a means for physical mixing. In addition, different catalysts may be introduced simultaneously or sequentially by using such an agitator, or the like, and mixed physically. In a variant, in preparing naphtha as described hereinafter, reactants, such as polyolefin, and different catalysts may be introduced together, and then such different catalysts may be mixed physically during hydrocracking.

<Method for preparing naphtha>

A method for preparing naphtha according to an exemplary embodiment of the present disclosure includes a step of carrying out hydrocracking by using polyolefin and the above-described catalyst for hydrocracking in the presence of hydrogen.

In an exemplary embodiment of the present disclosure, the step of carrying out hydrocracking may include allowing polyolefin to be in contact with the catalyst for hydrocracking.

In an exemplary embodiment of the present disclosure, a reaction temperature of 150°C or higher, 200°C or higher, or 250°C or higher, and 500°C or lower, 450°C or lower, 400°C or lower, 350°C or lower, or 300°C or lower may be applied to the step of carrying out hydrocracking.

Preferably, a reaction temperature of 150-500°C, 200-400°C or 250-300°C may be applied to the step of carrying out hydrocracking.

In an exemplary embodiment of the present disclosure, a hydrogen atmosphere with a partial pressure of 1 bar or higher, 10 har or higher, 20 bar or higher, 25 bar or higher, or 30 bar or higher, and 100 bar or lower, 90 bar or lower, 80 bar or lower, or 70 bar or lower may be applied to the step of carrying out hydrocracking.

Preferably, a hydrogen atmosphere with a partial pressure of 1-100 bar, 20-90 bar or 30-70 bar may be applied to the step of carrying out hydrocracking.

The method for preparing naphtha according to this embodiment allows realization of hydrocracking activity in the presence of the above-described catalyst under a mild condition and hydrocracking reaction condition, and thus has high selectivity to naphtha (C5-C12 alkenes) as a main product of hydrocracking in a short time and shows low selectivity to methane as a byproduct of hydrocracking, thereby preventing methane production effectively.

The method for preparing naphtha according to this embodiment can provide C5-C12 alkenes in an amount of larger than 50 wt% (i.e. have high selectivity to naphtha), wherein the other alkenes with the remaining number of carbon atoms (e.g. C2-C4 and/or C13 or higher alkenes) may also be provided, but in an amount of smaller than 50 wt%, which suggests that the method has low selectivity to the other alkenes.

In addition, the method for preparing naphtha according to this embodiment is advantageous in that it saves energy required for reaction while ensuring high activity of the above-described catalyst for hydrocracking even though such a low reaction temperature is maintained. Furthermore, yield of naphtha is low or little at a temperature below the lower limit of the reaction temperature, and the supported catalyst itself shows high activity at a temperature above the upper limit of the reaction temperature to cause an increase in yield of gaseous methane and/or C2-C4 alkenes, resulting in a decrease in yield of naphtha.

[Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

<Examples>

<Preparation Example 1> Preparation of Ru/TiO$_2$ supported catalyst

A Ru precursor was supported on an anatase TiO$_2$ support by using an incipient wetness impregnation method. Particularly, ruthenium (3+) chloride hydrate was used in an amount corresponding to 5 wt% and dissolved in 100 mL of distilled water to prepare a Ru precursor solution.

Then, 2 g of anatase TiO$_2$ was introduced to the Ru precursor solution, and the resultant solution was agitated at a rate of 400 rpm for 30 minutes, heated at 80°C by using a rotary evaporator set under a condition of 100 rpm, allowed to stand at 300 mbar and 250 mbar each for 10 minutes and allowed to stand at 200 mbar for 30 minutes to perform complete evaporation of water.

After that, the resultant product was dried in an oven at 105°C for about 10 hours and subjected to reduction by allowing it to stand under a condition of 10% hydrogen at 300°C for 3 hours. In this manner, a Ru/TiO$_2$ supported catalyst containing 5 wt% of ruthenium supported therein was finished.

<Preparation Example 2> Preparation of Ru/CeO$_2$ supported catalyst

A Ru precursor was supported on the surface of a CeO$_2$ support by using an incipient wetness impregnation method. Particularly, 0.2632 g of ruthenium (3+) chloride hydrate was used and dissolved in 3 mL of distilled water to prepare a precursor solution, and the solution was added to 2 g of CeO$_2$ 4 times in portion. In each addition process, agitation was carried out for about 10 minutes for the purpose of homogeneous mixing and drying was carried out in an oven at 105°C for 30 minutes, and then the same solution addition and drying processes were repeated.

Then, the resultant solution was dried overnight in an oven at 105°C, mixed homogeneously by means of mortar grinding, and then subjected to reduction at 400°C under the condition of 10% H$_2$/N$_2$ for 3 hours and to passivation at room temperature (about 25°C) under the condition of 3% O$_2$/N$_2$ for 20 minutes. In this manner, a 5 wt% Ru/CeO$_2$ supported catalyst was obtained.

<Preparation Example 3> Preparation of zeolite catalyst

Each of ammonium-form of BEA (Si/Al$_2$ = 25) and Y (Si/Al$_2$ = 30) produced by Alfa Aesar was subjected to a firing process by allowing it to stand in a static air furnace at 550°C for 5 hours to obtain each of hydrogen-form of HBEA(25)-type zeolite catalyst and HY(30)-type zeolite catalyst. Herein, HBEA(25) and HY(30) refer to HBEA(Si/Al$_2$ = 25) and HY (Si/Al$_2$ = 30), respectively.

<Examples 1 to 11 and Comparative Examples 1 to 14> Preparation of catalyst for hydrocracking

The Ru/TiO$_2$ supported catalyst according to Preparation Example 1 or the Ru/CeO$_2$ supported catalyst according to Preparation Example 2 was ground together with the zeolite catalyst (HBEA) according to Preparation Example 3 in a mortar, at the ratio as shown in the following Table 1, and agitated for about 15 minutes so that each supported catalyst and the zeolite catalyst might be mixed homogeneously to finish the physically mixed catalyst according to Example 1.

Further, each of the mixed catalysts according to Examples 2 to 11 and Comparative Examples 4 to 9, 11 and 12 was obtained by using the types of supported catalyst and zeolite catalyst at the ratio as shown in Table 1.

As examples corresponding to the use of a single catalyst, Comparative Example 1 uses the supported catalyst of Preparation Example 1, Comparative Example 2 uses the zeolite catalyst of Preparation Example 2, Comparative Example 3 uses zeolite (HBEA) as a support instead of TiO$_2$ or CeO$_2$, and Comparative Example 10 was obtained in the same manner as Preparation Example 1, except that the supported catalyst of Preparation Example 2 was used. Comparative Examples 13 and 14 correspond to catalysts using Pt as an active metal instead of Ru, wherein 5 wt% Pt/TiO$_2$ and Pt/CeO$_2$ supported catalysts were obtained in the same manner as Preparation Examples 1 and 2 by using 0.1200 g of tetraamine platinum (II) nitrate instead of 0.2632 g of ruthenium(III) chloride hydrate.

[Table 1]

| No. | Supported catalyst: zeolite catalyst (weight ratio) | Type of supported catalyst | Type of zeolite catalyst |
|---|---|---|---|
| Ex. 1 | 1:1 | Ru/TiO$_2$ | HBEA |

(continued)

| No. | Supported catalyst: zeolite catalyst (weight ratio) | Type of supported catalyst | Type of zeolite catalyst |
|---|---|---|---|
| Ex. 2 | 1:1 | Ru/TiO$_2$ | HY |
| Ex. 3 | 1:3 | Ru/TiO$_2$ | HBEA |
| Ex. 4 | 1:1 | Ru/CeO$_2$ | HBEA (25) |
| Ex. 5 | 1:1 | Ru/CeO$_2$ | HY (30) |
| Ex. 6 | 1:2 | Ru/CeO$_2$ | HBEA (25) |
| Ex. 7 | 1:3 | Ru/CeO$_2$ | HBEA (25) |
| Ex. 8 | 1:5 | Ru/CeO$_2$ | HBEA (25) |
| Ex. 9 | 1:7 | Ru/CeO$_2$ | HBEA (25) |
| Ex. 10 | 1:15 | Ru/CeO$_2$ | HBEA (25) |
| Ex. 11 | 1:2 | Ru/CeO$_2$ | HY (30) |
| Comp. Ex. 1 | 1:0 | Ru/TiO$_2$ | - |
| Comp. Ex. 2 | 0:1 | - | HBEA |
| Comp. Ex. 3 | 1:0 | Ru/HBEA | - |
| Comp. Ex. 4 | 3:1 | Ru/TiO$_2$ | HBEA |
| Comp. Ex. 5 | 2:1 | Ru/TiO$_2$ | HY |
| Comp. Ex. 6 | 1:5 | Ru/TiO$_2$ | HBEA |
| Comp. Ex. 7 | 1:7 | Ru/TiO$_2$ | HBEA |
| Comp. Ex. 8 | 1:15 | Ru/TiO$_2$ | HBEA |
| Comp. Ex. 9 | 1:31 | Ru/TiO$_2$ | HBEA |
| Comp. Ex. 10 | 1:0 | Ru/CeO$_2$ | - |
| Comp. Ex. 11 | 2:1 | Ru/CeO$_2$ | HBEA |
| Comp. Ex. 12 | 1:20 | Ru/CeO$_2$ | HBEA |
| Comp. Ex. 13 | 1:1 | Pt/TiO$_2$ | HBEA |
| Comp. Ex. 14 | 1:2 | Pt/CeO$_2$ | HBEA |

<Test example 1> Evaluation of hydrocracking

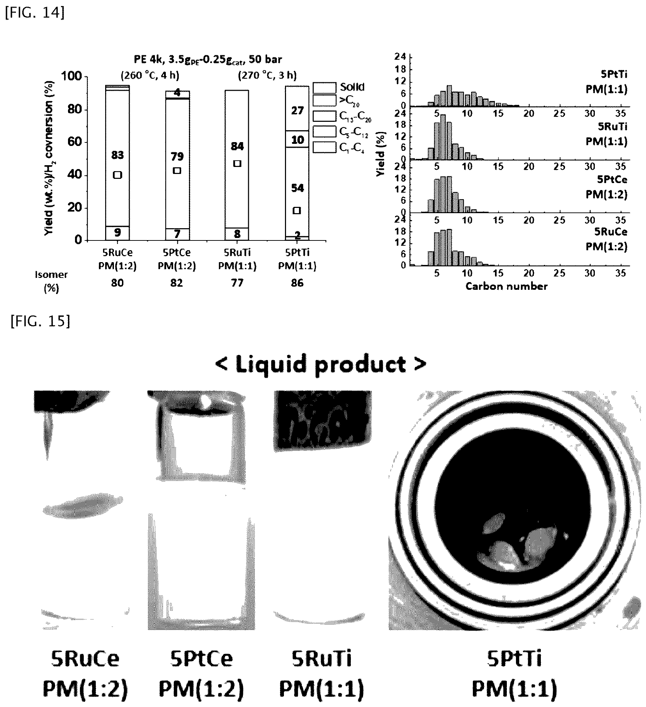

The mixed catalyst according to each of Examples and Comparative Examples was used to carry out hydrocracking of polyolefin (polyethylene having a molecular weight (MW) of about 4,000 g/mol) in a 25 mL stainless steel reactor (equipped with a mechanical agitator) available from Parr Instrument Company (Parr.) under the condition as shown in the following Table 2. The resultant methane yield, naphtha yield and polyethylene conversion are shown in Table 2. In addition, yield and distribution of each carbon number range for the catalyst for hydrocracking according to each of Examples 1 to 3 and Comparative Examples 1 to 9 are shown in FIG. 1 to FIG. 3. Additionally, yield and distribution of each carbon number range for the catalyst for hydrocracking according to each of Examples 4 to 11 and Comparative Examples 10 to 12 are shown in FIG. 7 to FIG. 9 and FIG. 12. Further, yield and distribution of each carbon number range for the catalyst for hydrocracking according to each of Comparative Examples 13 and 14 are shown in FIG. 14. In addition, the color of the liquid product according to each of Examples and Comparative Examples is shown in FIG. 6, FIG. 13 and FIG. 15.

[Table 2]

| No. | Loading ratio (polyethylene g/catalyst for hydrocracking g) | Hydrocracking condition (reaction temperature, hydrogen partial pressure and reaction time) | Composition of mixed catalyst (weight ratio) | Methane yield (wt%) | Naphtha yield (wt%) | PE conversion (wt%) | Liquid product color |
|---|---|---|---|---|---|---|---|
| Ex.1 | 28 | 250°C, 50 bar $H_2$, 16h | Ru/TiO$_2$ : HBEA (1:1) | 0.7 | 74 | 96 | transparent |
| | 14 | 270°C, 50 bar $H_2$, 3h | | 0.5 | 77 | 100 | Transparent |
| Ex.2 | 14 | 280°C, 50 bar $H_2$, 6h | Ru/TiO$_2$ : HY (1:1) | 0.17 | 72 | 88.2 | Transparent |
| Ex.3 | 14 | 270°C, 50 bar $H_2$, 3h | Ru/TiO$_2$ : HBEA (1:3) | 0.2 | 75 | 99.9 | Transparent |
| Ex.4 | 28 | 250°C, 50 bar $H_2$, 16h | Ru/CeO$_2$ : HBEA (1:1) | 5.0 | 60.7 | 99.9 | Transparent |
| Ex.5 | 28 | 250°C, 50 bar $H_2$, 16h | Ru/CeO$_2$ : HY (1:1) | 2.4 | 61.2 | 99.9 | transparent |
| Ex.6 | 28 | 250°C, 50 bar $H_2$, 16h | Ru/CeOz : HBEA (1:2) | 0.8 | 60.2 | 99.5 | transparent |
| | 14 | 260°C, 50 bar $H_2$, 4h | Ru/CeOz : HBEA (1:2) | 0.8 | 83.2 | 98.8 | Transparent |
| Ex.7 | 28 | 250°C, 50 bar $H_2$, 16h | Ru/CeO$_2$ : HBEA (1:3) | 0.4 | 59.5 | 99.5 | Transparent |
| Ex.8 | 14 | 260°C, 50 bar $H_2$, 4h | Ru/CeOz : HBEA (1:5) | 0.2 | 68.3 | 100 | Transparent |
| Ex.9 | 14 | 260°C, 50 bar $H_2$, 4h | Ru/CeO$_2$ : HBEA (1:7) | 0.1 | 66.6 | 100 | Transparent |
| Ex.10 | 14 | 260°C, 50 bar $H_2$, 4h | Ru/CeO$_2$ : HBEA (1:15) | 0.1 | 73.5 | 98.5 | transparent |
| Ex. 11 | 14 | 260°C, 50 bar $H_2$, 4h | Ru/CeOz : HY (1:2) | 0.2 | 66.2 | 84.2 | transparent |
| Comp. Ex. 1 | 56 | 250°C, 50 bar $H_2$, 16h | Ru/TiO$_2$ | 8 | 16 | 98 | transparent |
| | 28 | 270°C, 50 bar $H_2$, 3h | | 5 | 15 | 83 | Transparent |
| Comp. Ex.2 | 56 | 250°C, 50 bar $H_2$, 16h | HBEA | 0.003 | 11 | 25 | Dark yellow |
| | 14 | 260°C, 50 bar $H_2$, 4h | | 0 | 43.4 | 63.2 | Dark yellow |
| | 28 | 270°C, 50 bar $H_2$, 3h | | 0.003 | 19 | 33 | Dark yellow |
| Comp. Ex.3 | 42 | 260°C, 50 bar $H_2$, 4h | Ru/HBEA | 2.3 | 40.6 | 84.7 | Opaque |
| | 28 | 270°C, 50 bar $H_2$, 3h | | 13 | 41 | 99.7 | Transparent |

(continued)

| No. | Loading ratio (polyethylene g/catalyst for hydrocracking g) | Hydrocracking condition (reaction temperature, hydrogen partial pressure and reaction time) | Composition of mixed catalyst (weight ratio) | Methane yield (wt%) | Naphtha yield (wt%) | PE conversion (wt%) | Liquid product color |
|---|---|---|---|---|---|---|---|
| Comp. Ex.4 | 14 | 270°C, 50 bar H$_2$, 3h | Ru/TiO$_2$ : HBEA (3:1) | 3 | 46 | 99.8 | transparent |
| Comp. Ex.5 | 14 | 270°C, 50 bar H$_2$, 3h | Ru/TiO$_2$ : HY (2:1) | 0.1 | 6.9 | 27.5 | Transparent |
| Comp. Ex.6 | 14 | 270°C, 50 bar H$_2$, 3h | Ru/TiO$_2$ : HBEA (1:5) | 0.1 | 75 | 98 | Opaque |
| Comp. Ex.7 | 14 | 270°C, 50 bar H$_2$, 3h | Ru/TiO$_2$ : HBEA (1:7) | 0.1 | 75 | 99.5 | Light yellow |
| Comp. Ex.8 | 14 | 270°C, 50 bar H$_2$, 3h | Ru/TiO$_2$ : HBEA (1:15) | 0.1 | 73 | 98 | Light yellow |
| Comp. Ex.9 | 14 | 270°C, 50 bar H$_2$, 3h | Ru/TiO$_2$ : HBEA (1:31) | 0.03 | 75.7 | 92 | Dark yellow |
| Comp. Ex.10 | 56 | 250°C, 50 bar H$_2$, 16h | Ru/CeO$_2$ | 12.0 | 39.4 | 99.8 | Transparent |
| | 42 | 260°C, 50 bar H$_2$, 4h | | 8.8 | 26.6 | 98.0 | Transparent |
| Comp. Ex.11 | 14 | 260°C, 50 bar H$_2$, 4h | Ru/CeO$_2$ : HBEA (3:1) | 7.3 | 44.2 | 100 | Transparent |
| Comp. Ex.12 | 14 | 260°C, 50 bar H$_2$, 4h | Ru/CeO$_2$ : HBEA (1:20) | <0.1 | 77.5 | 96.0 | Dark yellow |
| Comp. Ex.13 | 14 | 270°C, 50 bar H$_2$, 3h | Pt/TiO$_2$ : HBEA (1:1) | <0.1 | 79.4 | 95.7 | Opaque |
| Comp. Ex.14 | 14 | 260°C, 50 bar H$_2$, 4h | Pt/TiOz : HBEA (1:2) | <0.1 | 54.5 | 72.8 | Opaque |

In Table 2, each of methane yield, naphtha yield and solid residue yield (Yi (wt%)) is a value calculated according to the following Formula (1), and PE (polyethylene) conversion (wt%) is a value calculated according to the following Formula (2).

$$Y_i\ (wt\%) = \frac{m_i}{m_{initial}} \times 100$$
Formula (1) –

In Formula (1), $mi$ is the weight of methane, naphtha or solid residue, and $m_{initial}$ is the weight of an initially introduced reactant.

The weight of methane and that of naphtha are calculated through qualitative analysis and quantitative analysis using gas chromatography (GC) under the following analysis conditions, and the weight of solid residue means a value calculated by subtracting the weight of an introduced catalyst from the weight after filtration and drying of solid residue detected after the reaction.

<GC analysis conditions>

1) GC model: Agilent 6890

2) Oven temperature:

   ① Gas phase analysis (C1-C4): 40°C (retention for 5 min.)-225°C (20°C/min. heating)-225°C (retention for 17min.)

   ② Liquid phase analysis (C5-C35): 50°C (retention for 1 min.)-320°C (5°C/min. warming)-320°C (retention for 1 min.)

3) Detector: FID, TCD, 250°C (gas phase), 320°C (liquid phase)

4) Sample loop: 0.25 mL

5) Valve box temperature: 150°C

$$\text{- PE conversion = 100 (wt\%) - solid residue yield (wt\%)} \qquad \text{Formula (2)}$$

In Formula (2), the solid residue yield is a value obtained according to the above Formula (1).

According to the above Table 2, FIG. 1 and FIG. 7, when using a $TiO_2$ supported catalyst alone under a mild condition of 250°C, 50 bar $H_2$ and 16h (Comparative Example 1), a high methane yield of about 7 wt% appears, and C5 or higher alkenes corresponding to the other liquid products show a broad product distribution. In addition, it can be seen from Comparative Example 2 using zeolite alone (see, (b) of FIG. 1) that polyethylene undergoes little hydrocracking and about 80 wt% of polyethylene remains, which suggests low catalytic activity. Comparative Example 10 using a $CeO_2$ supported catalyst alone provides a high liquid phase yield of about 65 wt%, but exhibits a broad distribution of C5-C32 alkenes, in which a low naphtha yield of about 40 wt% appears, and also exhibits a yield of gas phases (C1-C4 alkenes) of about 16 wt%, in which a high methane yield of about 12 wt% appears.

On the other hand, Example 1 (see, (a+b, PM) of FIG. 1) is a mixed catalyst satisfying $Ru/TiO_2$ : HBEA = 1:1, shows improved hydrocracking activity, thereby producing a large amount of naphtha (C5-C12 alkenes) from polyethylene. Particularly, as shown in FIG. 1, a narrow product distribution centering at C7 appears in the distribution of products of Example 1, and thus it is thought that physical mixing of the supported catalyst with the zeolite catalyst generates synergy to provide enhanced reaction activity and to increase naphtha yield while reducing methane yield. Particularly, Example 1 shows a higher naphtha yield although it uses a lower loading ratio as compared to Comparative Examples 1 and 2, and thus it is thought that the catalyst according to an exemplary embodiment of the present disclosure shows significantly improved efficiency.

In addition, referring to FIG. 2, Comparative Example 1 using a supported catalyst alone under a mild condition of 270°C, 50 bar, 3h and Comparative Example 3 using ruthenium supported on BEA (represented by HBEA) show a naphtha yield reduced by about 30 wt% as compared to Example 1. Additionally, the catalysts according to Comparative Examples 1 and 3 show a broader distribution of products as compared to Example 1. Particularly, Comparative Example 3 is a catalyst containing ruthenium supported on zeolite and shows a lower naphtha yield as compared to Example 1 and physically mixed catalysts, which suggests that physical mixing is an important factor in catalytic activity.

Further, referring to FIG. 3, under the same mild condition of 270°C, 50 bar $H_2$, 3h and at the same loading ratio of 14, all of Examples 1 and 3 and Comparative Examples 5 to 9 (1:1, 1:3, 1:5, 1:7, 1:15 and 1:31 in the order stated, the 3rd-8th bar graphs from the left side of FIG. 3) show high hydrocracking activity and exhibit a narrow distribution of products centering at C5-C7 alkenes, as can be seen from the distribution graph on the right. However, referring to FIG. 6, it can be seen that Comparative Examples 6 to 9 have a weight ratio of the supported catalyst to the zeolite catalyst that does not fall within the condition of 1:1 to 1:3, and thus provide liquid products having an opaque or yellow color, which suggests a high ratio of olefins and aromatic substances determining low-quality naphtha.

Furthermore, it is determined that each of Comparative Example 1 (using a supported catalyst alone, 1:0, the far left bar graph) and Comparative Example 2 (using a zeolite catalyst alone, 0:1, the far right bar graph) provides a high methane yield or does not allow hydrocracking of polyethylene. Comparative Example 4 (using a supported catalyst and a zeolite catalyst at a weight ratio of 3:1, the 2nd bar graph from the left side) shows a lower degree of enhancing activity as compared to the physically mixed catalysts of Examples and provides a low naphtha yield of less than 50 wt%.

Meanwhile, Examples 4 and 5, each of which is a mixed catalyst of a $CeO_2$ supported catalyst with a zeolite catalyst and uses a different type of zeolite catalyst, show a similar value of liquid phase yield as compared to Comparative Example 10 using a $Ru/CeO_2$ supported catalyst alone, but about 62 wt% of the liquid phase is obtained as naphtha, and exhibits a narrow distribution centering at C6 or C7 alkenes. In addition, as compared to Comparative Example 10, Example 4 shows a similar value of yield of gases, but methane yield in the yield of gases is significantly reduced to about 2 wt%. It can be seen from the foregoing that physical mixing of a $Ru/CeO_2$ supported catalyst with a zeolite catalyst (HY or HBEA) provides a synergic effect of significantly increasing reaction activity capable of selectively producing naphtha while inhibiting methane production through the interaction of both catalysts.

In addition, referring to FIG. 8, when the reaction temperature is increased to 260°C, Comparative Example 10 using a supported catalyst alone causes excessive cracking of products to provide a reduced naphtha yield as compared to the above-mentioned mild condition. On the other hand, in this case, it is shown that Example 4 using a mixed catalyst provides a high naphtha yield and maintains a low methane yield despite such an temperature increase of 10°C.

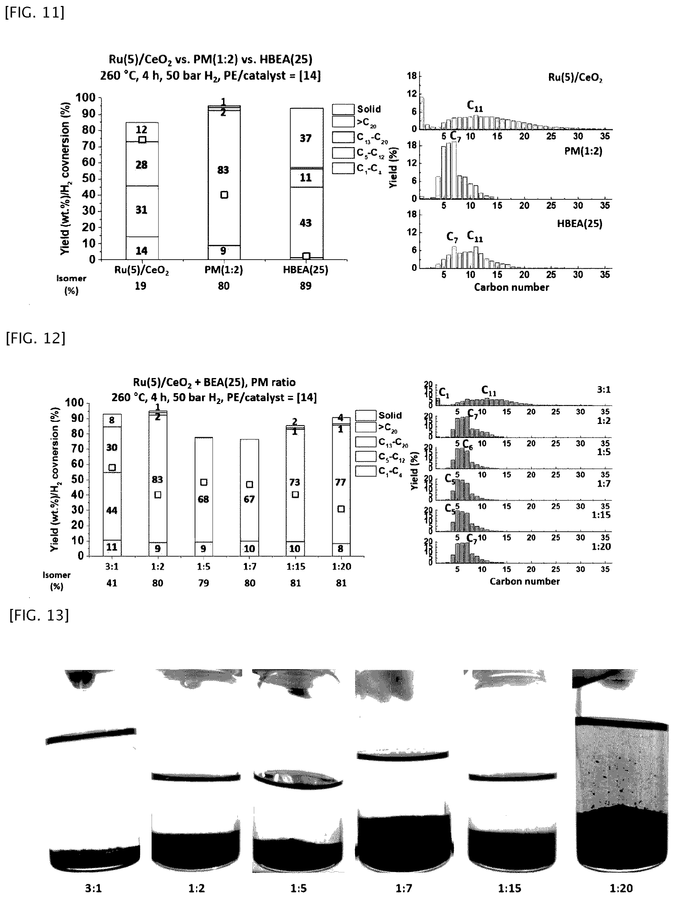

Further, referring to FIG. 9 and FIG. 12, under the condition of a mild environment of 250°C, 50 bar $H_2$, 16h and a loading ratio of 28 and under the condition of 260°C, 50 bar $H_2$, 4h and a loading ratio of 14, it is shown that Examples 4, 6 and 11 improve naphtha production, inhibit methane production, maintain high hydrocracking activity and exhibit a narrow distribution of products centering at C6 or C7 alkenes, as long as a weight ratio of the $Ru/CeO_2$ supported catalyst to the zeolite catalyst satisfies a range of 1:1 to 1:15. Particularly, a naphtha distribution centering at C7 appears at a weight ratio of the supported catalyst to the zeolite catalyst of 1:1 , while a shift to a naphtha distribution centering at C6 appears at a weight ratio of 1:2 or 1:3. On the other hand, Comparative Example 10 (using a $Ru/CeO_2$ supported catalyst alone) shows a broad product distribution as described above, a high methane yield and a low naphtha yield, as described above.

Referring to FIG. 11, under the condition of a mild environment of 260°C, 50 bar $H_2$, 4h and a loading ratio of 14, Example 6 improves naphtha production, inhibits methane production, maintains high hydrocracking activity and exhibits a narrow distribution of products centering at C5 to C7 alkenes, as long as a weight ratio of the $Ru/CeO_2$ supported catalyst to the zeolite catalyst satisfies a range of 1:1 to 1:15. On the other hand, Comparative Examples 10 and 2 show a broad distribution of products in which a high methane yield or low naphtha yield appears.

In the case of Comparative Example 3, since it is a Ru/HBEA supported catalyst containing no $CeO_2$, it shows a low naphtha yield of less than 50 wt% and provides a low PE conversion. In addition, Comparative Examples 11 and 12 not satisfying a weight ratio of a supported catalyst to a zeolite catalyst ranging from 1:1 to 1:15, and Comparative Example 4 using a relatively larger amount of supported catalyst as compared to Examples show a low naphtha yield of 44.2 wt% and a high methane yield of 7.3 wt%, and thus it can be seen that it shows a significantly higher methane yield as compared to Examples 6, 8 and 9 to 11 using the same loading ratio of 14. In addition, Comparative example 12 using a relatively larger amount of zeolite catalyst as compared to Examples shows a high methane yield, a high naphtha yield and a high PE conversion, equivalent to those of Examples, but it can be seen that the liquid product solution has a dark yellow color as shown in FIG. 13, which suggests the presence of a large amount of olefin byproducts and low quality of naphtha.

**Claims**

1. A catalyst for hydrocracking, comprising a mixed catalyst of a $Ru/TiO_2$ supported catalyst with a zeolite catalyst, wherein the mixed catalyst has a weight ratio of the $Ru/TiO_2$ supported catalyst to the zeolite catalyst of 1:1 to 1:3.

2. A catalyst for hydrocracking, comprising a mixed catalyst of a $Ru/CeO_2$ supported catalyst with a zeolite catalyst, wherein the mixed catalyst has a weight ratio of the $Ru/CeO_2$ supported catalyst to the zeolite catalyst of 1:1 to 1:15.

3. The catalyst for hydrocracking according to claim 1, wherein $TiO_2$ is any one type selected from rutile, anatase and brookite, or a combination thereof.

4. The catalyst for hydrocracking according to claim 1 or 2, wherein the zeolite catalyst is any one selected from FAU (faujasite), BEA (beta), MOR (high-silica mordenite), MFI (ZSM-5), FER (high-silica ferrierite) and CHA (chabazite, SSZ-13), a hydrogen form thereof, or a combination thereof

5. The catalyst for hydrocracking according to claim 1 or 2, wherein the zeolite catalyst has a pore diameter of 5.4 Å or more.

6. The catalyst for hydrocracking according to claim 1, wherein the $Ru/TiO_2$ supported catalyst comprises Ru in an amount of 0.1-10 parts by weight based on 100 parts by weight of $TiO_2$.

7. The catalyst for hydrocracking according to claim 2, wherein the $Ru/CeO_2$ supported catalyst comprises Ru in an amount of 0.1-10 parts by weight based on 100 parts by weight of $CeO_2$.

8. A method for preparing a catalyst for hydrocracking, comprising the steps of:

   supporting a Ru precursor on a $TiO_2$ support to prepare a $Ru/TiO_2$ supported catalyst; and
   physically mixing the $Ru/TiO_2$ supported catalyst with a zeolite catalyst to obtain a mixed catalyst,
   wherein the mixed catalyst has a weight ratio of the $Ru/TiO_2$ supported catalyst to the zeolite catalyst of 1:1 to 1:3.

9. The method for preparing a catalyst for hydrocracking according to claim 8, wherein the step of preparing a $Ru/TiO_2$ supported catalyst comprises the steps of:

> preparing a precursor solution containing a Ru precursor;
> adding $TiO_2$ to the precursor solution to prepare a slurry;
> drying the slurry; and
> reducing the dried slurry under hydrogen atmosphere to obtain a $Ru/TiO_2$ supported catalyst.

10. The method for preparing a catalyst for hydrocracking according to claim 8, wherein the step of preparing a $Ru/TiO_2$ supported catalyst comprises a step of supporting the Ru precursor on a $TiO_2$ support through an impregnation method, a precipitation method or an ion exchange method.

11. A method for preparing a catalyst for hydrocracking, comprising the steps of:

> supporting a Ru precursor on a $CeO_2$ support to prepare a $Ru/CeO_2$ supported catalyst; and
> physically mixing the $Ru/CeO_2$ supported catalyst with a zeolite catalyst to obtain a mixed catalyst,
> wherein the mixed catalyst has a weight ratio of the $Ru/CeO_2$ supported catalyst to the zeolite catalyst of 1:1 to 1:15.

12. The method for preparing a catalyst for hydrocracking according to claim 11, wherein the step of preparing a $Ru/CeO_2$ supported catalyst comprises the steps of:

> preparing a precursor solution containing a Ru precursor;
> adding $CeO_2$ to the precursor solution to prepare a slurry;
> drying the slurry; and
> reducing the dried slurry under hydrogen atmosphere to obtain a $Ru/CeO_2$ supported catalyst.

13. The method for preparing a catalyst for hydrocracking according to claim 11, wherein the step of preparing a $Ru/CeO_2$ supported catalyst comprises a step of supporting the Ru precursor on a $CeO_2$ support through an impregnation method, a precipitation method or an ion exchange method.

14. A method for preparing naphtha, comprising a step of carrying out hydrocracking by using polyolefin and the catalyst for hydrocracking as defined in claim 1 or 2 in the presence of hydrogen.

15. The method for preparing naphtha according to claim 14, wherein the step of carrying out hydrocracking comprises allowing polyolefin to be in contact with the catalyst for hydrocracking.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

## < Liquid product >

5RuCe
PM(1:2)

5PtCe
PM(1:2)

5RuTi
PM(1:1)

5PtTi
PM(1:1)

## INTERNATIONAL SEARCH REPORT

| International application No. |
| --- |
| **PCT/KR2025/006817** |

| A. | CLASSIFICATION OF SUBJECT MATTER |
| --- | --- |

**B01J 29/12**(2006.01)i; **B01J 29/22**(2006.01)i; **B01J 29/44**(2006.01)i; **B01J 29/67**(2006.01)i; **B01J 23/46**(2006.01)i; **B01J 21/06**(2006.01)i; **B01J 35/64**(2024.01)i; **B01J 37/02**(2006.01)i; **C10G 47/14**(2006.01)i; **C10G 47/18**(2006.01)i

According to International Patent Classification (IPC) or to both national classification and IPC

| B. | FIELDS SEARCHED |
| --- | --- |

Minimum documentation searched (classification system followed by classification symbols)

B01J 29/12(2006.01); B01J 29/068(2006.01); B01J 35/00(2006.01); B01J 35/60(2024.01); C10G 1/06(2006.01); C10G 1/10(2006.01); F01N 3/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 루테늄(Ru, ruthenium), 이산화티탄(TiO2, titanium dioxide), 이산화세륨 (cerium dioxide), 제올라이트(zeolite), 촉매(catalyst), 수첨분해(hydrocracking, hydrogenolysis), 폴리올레핀(polyolefin) , 납사(naphtha)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2011-0047995 A1 (LEWIS, L. N. et al.) 03 March 2011 (2011-03-03) claims 1, 3; paragraphs [0029]-[0047] | 1-7 |
| Y | | 8-15 |
| Y | WO 2022-192484 A1 (UNIVERSITY OF DELAWARE) 15 September 2022 (2022-09-15) pages 25-29 | 8-15 |
| A | CAO, K. et al. Synergistic roles of Ru, CeO2, and HZSM-5 in a ternary-active center catalyst for catalytic destruction of dichloromethane. Separation and Purification Technology. 2024 (17 January 2024 published online), vol. 339, document no.: 126446, pp. 1-13. pages 1, 2 | 1-15 |
| A | KR 10-2023-0097547 A (KOREA ADVANCED INSTITUTE OF SCIENCE AND TECHNOLOGY) 03 July 2023 (2023-07-03) claims 1-16 | 1-15 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 September 2025** | **08 September 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/006817**

| C. | DOCUMENTS CONSIDERED TO BE RELEVANT | | |
|---|---|---|---|
| Category* | Citation of document, with indication, where appropriate, of the relevant passages | | Relevant to claim No. |
| A | KR 10-2024-0046358 A (CERACOMB CO., LTD.) 09 April 2024 (2024-04-09)<br>claims 1-12 | | 1-15 |

Form PCT/ISA/210 (second sheet) (July 2022)

## INTERNATIONAL SEARCH REPORT
### Information on patent family members

International application No.

**PCT/KR2025/006817**

| Patent document cited in search report | | | Publication date (day/month/year) | Patent family member(s) | | | Publication date (day/month/year) |
|---|---|---|---|---|---|---|---|
| US | 2011-0047995 | A1 | 03 March 2011 | EP | 2192979 | A2 | 09 June 2010 |
| | | | | EP | 2298433 | A1 | 23 March 2011 |
| | | | | US | 2009-0074641 | A1 | 19 March 2009 |
| | | | | US | 2009-0075813 | A1 | 19 March 2009 |
| | | | | US | 2009-0263297 | A1 | 22 October 2009 |
| | | | | US | 2010-0143227 | A1 | 10 June 2010 |
| | | | | US | 2010-0150801 | A1 | 17 June 2010 |
| | | | | US | 2010-0233053 | A1 | 16 September 2010 |
| | | | | US | 2014-0378296 | A1 | 25 December 2014 |
| | | | | US | 2015-0151291 | A1 | 04 June 2015 |
| | | | | US | 8530369 | B2 | 10 September 2013 |
| | | | | US | 8871669 | B2 | 28 October 2014 |
| | | | | US | 9272271 | B2 | 01 March 2016 |
| | | | | US | 9375710 | B2 | 28 June 2016 |
| | | | | WO | 2009-038855 | A2 | 26 March 2009 |
| | | | | WO | 2009-038855 | A3 | 24 February 2011 |
| | | | | WO | 2009-038901 | A1 | 26 March 2009 |
| WO | 2022-192484 | A1 | 15 September 2022 | US | 2024-0165590 | A1 | 23 May 2024 |
| KR | 10-2023-0097547 | A | 03 July 2023 | KR | 10-2715487 | B1 | 11 October 2024 |
| | | | | US | 2023-0201804 | A1 | 29 June 2023 |
| KR | 10-2024-0046358 | A | 09 April 2024 | WO | 2024-071710 | A1 | 04 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240065091

- KR 1020240065095